# FASCICULE DE BREVET EUROPEEN

(11) **EP 2 753 904 B1**
(45) Date de publication et mention de la délivrance du brevet: **23.03.2016**
(21) Numéro de dépôt: 12754012.8
(22) Date de dépôt: 06.09.2012
(51) Int. Cl.: G01K 15/00, G01K 11/32

(54) **DISPOSITIF D'ETALONNAGE EN TEMPERATURE ET PROCEDES D'ETALONNAGE EN TEMPERATURE ET POSITIONNEMENT D'UN CAPTEUR DE TEMPERATURE A FIBRE OPTIQUE**
VORRICHTUNG ZUM KALIBRIEREN DER TEMPERATUR UND VERFAHREN ZUR KALIBRIERUNG IN TEMPERATUR UND POSITION EINES FASEROPTISCHEN TEMPERATURSENSORS
DEVICE FOR CALIBRATING TEMPERATURE, AND METHODS FOR CALIBRATING IN TEMPERATURE AND IN POSITION A FIBER-OPTIC TEMPERATURE SENSOR

(30) Priorité: 09.09.2011 FR 1158032
(43) Date de publication de la demande: 16.07.2014
(73) Titulaire: Agence Nationale pour la Gestion des Déchets Radioactifs, 92298 Châtenay-Malabry (FR); Laboratoire National de Metrologie et d'Essais, 75724 Paris Cedex 15 (FR)
(72) Inventeur: BERTRAND,Johan, F-91570 Bièvres (FR); DUBOIS, Jean-Philippe, F-95170 Deuil-la-Barre (FR); MORICE, Ronan, F-92370 Chaville (FR); SOLLET, Patrick, F-28300 Mainvilliers (FR); LESAUVAGE, Alain, F-78990 Elancourt (FR)
(74) Mandataire: Ahner, Philippe
(86) Numéro de dépôt international: PCT/EP2012/067410
(87) Numéro de publication internationale: WO 2013/034640

(56) Documents cités:
- GB-A- 2 181 830
- GB-A- 2 210 451
- JP-A- 2001 201 406
- US-A- 5 825 804

## Description

### DOMAINE TECHNIQUE

L'invention se rapporte au domaine de la mesure de température par fibre optique et les procédés d'étalonnage en température et en distance utilisés lors de telles mesures.

L'observation et la surveillance des ouvrages de génie civil nécessitent de bien connaitre un paramètre important qu'est la température et ses écarts, ceci dans le but :
1. d'analyser le comportement des ouvrages décorrélé des fluctuations environnementales thermiques ;
2. et de détecter les évènements anachroniques tels que des points chauds ou des fuites de fluide sur des grands ouvrages hydrauliques, tels que les digues, les barrages hydroélectriques, ou utilitaires, tels que les bâtiments d'entreposage et de confinement de déchets, les autoroutes ou certains tunnels.

Ces ouvrages nécessitent donc des méthodes de suivi en mesures de température qui soient adaptées, fiables d'un point de vue métrologique, avérées lors de la mise en place d'alarme et résolues en distance, ceci afin de réaliser des mesures automatiques à intervalles réguliers sur l'ensemble de l'ouvrage.

Une telle méthode est également nécessaire pour la surveillance d'installations de récupération ou de distribution d'énergie du type : tubes de forage, pipelines, conduites d'eau courantes forcées, canalisations d'alimentation de chauffage urbain et systèmes de récupération d'énergie pour la géothermie.

En raison des distances à couvrir, pouvant dépasser plusieurs dizaines de kilomètres, et de l'inaccessibilité de certaines de ces zones à surveiller, il est connu d'utiliser des méthodes de mesures en température mettant en oeuvre des capteurs de température à fibre optique. En effet, un tel capteur de température à fibre optique permet, en fonction de la méthodologie employée, de réaliser des mesures en température régulièrement le long d'une fibre optique sur des distances supérieures à la dizaine de kilomètres.

Pour l'ensemble des méthodes de mesure de température à fibre optique, la mesure de température est relative. Il peut donc être nécessaire de prévoir, lors de l'installation, et tout au long de l'utilisation d'un capteur de température à fibre optique, d'effectuer un étalonnage en température d'un tel capteur. En effet, un tel étalonnage permet de vérifier le bon fonctionnement et/ou d'estimer la dérive en température du capteur.

On entend ici, et dans la suite de la description, par mesure de température absolue et par mesure de température relative, respectivement, une mesure de température thermodynamique ne faisant pas intervenir de différentiel de température et étant exprimée dans n'importe quelle unité de température, et une mesure d'un différentiel de température pouvant être un différentiel vis-à-vis d'une température de référence ou d'une variation de température dans le temps.

L'invention concerne plus précisément un dispositif d'étalonnage en température d'un capteur de température à fibre optique, un procédé d'étalonnage en température et un procédé d'étalonnage en distance d'un capteur de température à fibre optique.

### ÉTAT DE LA TECHNIQUE ANTÉRIEURE

Différents types de capteurs de température à fibre optique existent, le type de capteur de température étant généralement déterminé par les caractéristiques de mesures thermiques recherchées, comme la résolution spatiale et thermométrique, les distances sur lesquelles doit se faire la surveillance en température, ou encore, les possibilités de surveiller d'autres paramètres, tels que les déformations de l'ouvrage surveillé.

Ainsi la mesure en température peut être réalisée par la mise en place de capteurs à fibre optique dits « ponctuels » de type réseaux de Bragg, qu'ils soient photo-inscrits (plus connus sous l'acronyme anglais FBG pour Fiber Bragg Grating) ou géométriques (plus connus sous l'acronyme anglais LPG pour Long Period fiber Grating), ceux-ci étant placés judicieusement aux endroits auxquels une mesure de température est nécessaire, ou par l'exploitation de l'un des phénomènes non-linéaires de rétrodiffusion de la lumière qui peuvent avoir lieux le long de la fibre, à savoir les phénomènes de rétrodiffusion Rayleigh, Brillouin et Raman.

Quel que soit le type de capteur à fibre optique utilisé, la fibre optique du capteur étant destinée à équiper un grand ouvrage sur des durées bien supérieures à la dizaine d'années, les capteurs à fibre optique sont susceptible de présenter des problèmes de dérives dans le temps de la mesure de température. De telles dérives ne peuvent être ignorées et nécessitent donc un étalonnage régulier du capteur à fibre optique. De même, les mesures avec un tel capteur sont dépendantes des appareillages utilisés, tels que le laser et le photodétecteur, dont le remplacement, suite à une panne par exemple, peut occasionner une erreur systématique dans la mesure de température.

Dans le but de répondre à ces différents problèmes, différentes méthodologies d'étalonnage en température d'un capteur à fibre optique ont été mises en place.

Une première méthodologie, décrite dans le brevet US 7529434 et la demande internationale WO 2010/036360, consiste à combiner plusieurs types de mesures sur une même fibre optique pour étalonner le capteur de température à fibre optique. Ainsi, il est possible, comme décrit dans le document US 7529434, de combiner une mesure en température utilisant le phénomène de rétrodiffusion Raman avec celui de la rétrodiffusion Brillouin. Il est également possible de combiner des mesures utilisant un même phénomène de rétrodiffusion, la rétrodiffusion Raman dans le document WO 2010/036360, à partir de deux sources de lumière de différentes longueurs d'ondes. Cette méthodologie permet, de par l'utilisation de la fibre optique en elle-même pour l'étalonnage, de réaliser l'étalonnage en température à un emplacement quelconque de la fibre optique.

Néanmoins, si la combinaison de deux méthodes de mesure de température le long de la fibre optique d'un capteur de température à fibre optique permet de réduire les problèmes de dérive inhérent à ces techniques, il est nécessaire de corréler ces mesures à la fois spatialement et en température. Cette double corrélation engendre une incertitude sur la mesure en température. De plus, ces techniques restent soumisses au fait que ces mesures sont des mesures de température relative qui ne permettent pas d'obtenir une mesure absolue de la température.

Une deuxième méthodologie, consiste, comme décrit dans le brevet GB 2407637, à installer régulièrement le long de la fibre des capteurs de température secondaires aptes à faire une mesure en température absolue, l'étalonnage de la fibre optique étant réalisé à la température mesurée par le capteur de mesure secondaire.

Si de tels capteurs de température permettent de fournir une référence pour l'étalonnage en température de la fibre optique, ils peuvent, eux aussi présenter une dérive thermique et donc présenter une reproductibilité limitée quant à l'étalonnage en température. De plus de tels capteurs secondaires ne permettent pas d'étalonner la fibre optique à différentes températures, cet étalonnage étant forcément réalisé à la température de la fibre optique au moment de l'étalonnage.

Une troisième méthodologie, dérivée de la deuxième, consiste, comme le décrit la demande de brevet CN 101387562, à combiner sous la forme d'un dispositif d'étalonnage un capteur secondaire avec un système de transfert d'énergie thermique, tel qu'un système de chauffage et/ou un système de refroidissement. Un tel dispositif d'étalonnage comporte un corps de dispositif comprenant un passage pour la fibre optique, le système de transfert d'énergie thermique à la fibre optique combiné avec un moyen de régulation de la température de ce système de transfert d'énergie thermique et le capteur secondaire. Le système de transfert est relié thermiquement à la fibre optique et le capteur secondaire est agencé dans le corps de manière à mesurer la température au niveau de la fibre optique à proximité du système d'échange thermique.

Ainsi, la fibre optique présentant une partie logée dans le passage du corps de dispositif, lors de l'étalonnage du capteur, le système d'échange thermique est mis en oeuvre de manière à réguler à une température prédéfinie. La partie de la fibre optique est amenée à la température prédéfinie et la mesure de la température au moyen du capteur à fibre optique permet d'obtenir l'étalonnage.

Néanmoins, si une telle méthode permet un étalonnage à n'importe quelle température, elle pose problème vis-à-vis de sa stabilité dans le temps. En effet, les moyens de transfert d'énergie thermique et le capteur secondaire peuvent présenter une dérive dans le temps et donc occasionner une erreur d'étalonnage du capteur à fibre optique.

Les documents US5825804, GB2181830, GB2210451 et JP2001201406 décrivent aussi différents dispositifs d'étalonnage en température et/ou en distance de capteurs de température à fibre optique.

### EXPOSÉ DE L'INVENTION

La présente invention vise à remédier à cet inconvénient.

Un des buts de l'invention est donc de fournir un dispositif d'étalonnage en température d'un capteur de température à fibre optique qui permette un étalonnage en température d'un capteur de température à fibre optique sur site et qui permette un étalonnage en température absolue ceci de manière durable et reproductible sur des durées pouvant dépasser la dizaine d'années.

A cet effet, l'invention concerne un dispositif d'étalonnage en température d'un capteur de température à fibre optique destiné à équiper une fibre optique d'un capteur de température à fibre optique, ledit dispositif comportant :
- un corps de dispositif présentant un passage pour la fibre optique, et
- un moyen de transfert d'énergie thermique,
le dispositif comportant au moins une portion, dite premier point fixe, réalisée dans un premier matériau présentant au moins une première température prédéfinie de changement d'état, ledit premier point fixe étant destiné à être en liaison thermique avec la fibre optique lorsque le dispositif équipe la fibre optique, le moyen de transfert thermique étant agencé dans le corps de dispositif de manière à ce que lors de son actionnement le moyen de transfert thermique échange de l'énergie thermique avec le premier point fixe pour en entraîner un changement d'état à la première température prédéfinie.

On entend ici, et dans le reste de ce document, par un changement d'état du point fixe, un changement d'état du matériau composant ledit point fixe.

On entend également ici, et dans le reste de ce document, par changement d'état d'un matériau, le passage dudit matériau d'un état à un autre, tel que la fusion, correspondant au passage de l'état solide à l'état liquide, la solidification, correspondant au passage de l'état liquide à l'état solide ou encore la sublimation correspondant au passage de l'état solide à l'état gazeux.

Un tel dispositif, de par son passage, peut équiper une fibre optique, que ce soit en production lors d'un étalonnage de la fibre optique avant son installation sur site, ou sur site, lorsque la fibre optique équipe un ouvrage ou des équipements à surveiller. Ce dispositif permet également un étalonnage à la température prédéfinie, ceci avec une bonne résolution puisque cette température est celle correspondant au changement d'état du premier point fixe, et ceci de manière durable, puisque la température prédéfinie ne dépend que de la composition du matériau constituant le point fixe. Ainsi, il est possible avec un tel dispositif d'étalonner en température un capteur à fibre optique ceci à une température contrôlée sans risque de dérive dans le temps même sur des durées supérieures à la dizaine d'années.

Le premier matériau peut être constitué d'un seul élément ou d'un composé de plusieurs éléments, tel qu'un alliage de métaux.

Le moyen de transfert d'énergie thermique peut être fourni par un système de chauffage, comme une résistance de chauffage, et/ou un système de refroidissement, comme un module Peltier.

Il peut être prévu en outre une portion en matériau conducteur thermique, ladite portion étant agencée dans le corps de dispositif de manière à fournir une liaison thermique entre le premier point fixe et la fibre optique lorsque le dispositif équipe la fibre optique.

Un tel matériau conducteur permet de faire un pont thermique entre la fibre optique, lorsque le dispositif équipe la fibre optique d'un capteur à fibre optique, de cette manière il est possible de relier une partie de la fibre optique de plus grande dimension que si le point fixe était en contact direct avec la fibre optique.

Le matériau conducteur thermique peut être un matériau dont au moins l'un des constituants est sélectionné dans le groupe comportant le cuivre, les alliages de cuivre, comme le tellure de cuivre, l'aluminium et les alliages d'aluminium.

Un tel matériau conducteur présente une forte conductivité thermique permettant d'optimiser les échanges thermiques entre le moyen de transfert d'énergie thermique et la fibre optique.

La portion en matériau conducteur peut être de forme allongée, le passage étant un passage longitudinal ménagé dans ladite portion en matériau conducteur.

De cette manière, lorsque la fibre optique est équipée du dispositif, la fibre étant disposée dans le passage, les échanges thermiques au travers de la portion en matériau conducteur peuvent se faire sur la totalité de la surface de la partie de la fibre optique disposée dans ledit passage.

Selon une variante de l'invention, le passage peut présenter un système d'introduction latérale adapté pour autoriser l'introduction latérale d'une fibre optique dans le passage, le système d'introduction étant en outre adapté pour maintenir en place la fibre optique après son introduction dans le passage.

Un tel système d'introduction permet une installation du dispositif sur une fibre optique déjà en place, l'installation pouvant se faire par introduction latérale.

Il peut être prévu en outre un moyen de mesure de température agencé pour mesurer la température de la portion en matériau conducteur et/ou du premier point fixe, ledit moyen de mesure étant préférentiellement adapté pour réaliser une mesure de température absolue.

Un tel moyen de mesure de température permet de vérifier le bon fonctionnement du dispositif d'étalonnage, le dispositif étant généralement destiné à être intégré, avec la fibre optique, dans l'ouvrage à surveiller avec une accessibilité réduite.

Le premier point fixe étant destiné à être en liaison thermique avec la fibre optique sur une partie de la fibre optique, ladite liaison thermique peut être adaptée de manière à ce que la longueur de la partie de la fibre optique en liaison thermique avec le premier point fixe est supérieure ou égale à la résolution spatiale du capteur de température à fibre optique.

Une telle liaison thermique du premier point fixe avec la fibre optique permet d'assurer que la mesure de température faite par le capteur de température à fibre optique au niveau du dispositif, ceci lors de la mise en oeuvre du dispositif pour l'étalonnage du capteur de température, soit le plus exacte possible en réduisant l'influence de l'environnement de la fibre optique à proximité de l'emplacement du dispositif sur la fibre optique.

Le moyen de transfert d'énergie thermique peut comprendre un moyen de régulation de l'énergie thermique adapté pour réguler l'énergie thermique échangée entre le moyen de transfert d'énergie thermique et le premier point fixe.

Un tel moyen de régulation de l'énergie thermique permet un échange de température bien contrôlé, limitant ainsi l'énergie consommée par le dispositif pendant sa mise en oeuvre et maximisant le temps de changement d'état du premier point fixe en optimisant ainsi la stabilisation de la température de la fibre optique pendant son étalonnage.

Des moyens de confinement thermique peuvent être prévus, lesdits moyens de confinement étant agencés de manière à limiter les pertes thermiques lors de l'échange de l'énergie thermique entre le moyen de transfert d'énergie thermique et le premier point fixe.

De tels moyens de confinement réduisent les pertes d'énergie thermique pendant la mise en oeuvre du dispositif limitant ainsi la consommation énergétique du dispositif tout en stabilisant sa température.

Il peut également être prévu au moins une portion, dite deuxième point fixe, réalisée dans un deuxième matériau présentant au moins une deuxième température prédéfinie de changement d'état différente de la première température prédéfinie, ledit deuxième point fixe étant destiné à être en liaison thermique avec la fibre optique lorsque le dispositif équipe la fibre optique et le moyen de transfert thermique étant agencé dans le corps de dispositif de manière à ce que lors de son actionnement le moyen de transfert thermique échange de l'énergie thermique avec le deuxième point fixe pour en entraîner un changement d'état à la deuxième température prédéfinie.

Une telle deuxième portion permet l'étalonnage de la fibre optique à au moins deux températures prédéfinies permettant ainsi d'avoir une mesure en température du capteur en température qui soit le plus exacte possible quelle que soit la température mesurée.

Le corps peut être hermétiquement fermé lorsque le dispositif équipe une fibre optique, cette fermeture hermétique étant préférentiellement obtenue au moyen de joints d'étanchéité disposé aux entrées du passage.

Selon une application particulière dans laquelle le dispositif est adapté pour la calibration d'une fibre optique destiner à travailler sur une plage de température allant de 0 à 100°C, il peut également être prévu au moins une portion, dite troisième point fixe, réalisée dans un troisième matériau présentant au moins une troisième température prédéfinie de changement d'état différente de la première et de la deuxième température prédéfinie, ledit troisième point fixe étant destiné à être en liaison thermique avec la fibre optique lorsque le dispositif équipe la fibre optique et le moyen de transfert thermique étant agencé dans le corps de dispositif de manière à ce que lors de son actionnement le moyen de transfert thermique échange de l'énergie thermique avec le troisième point fixe pour en entraîner un changement d'état à la troisième température prédéfinie, le premier matériau étant composé de 99,78% de gallium en poids et de 0,22% de bismuth en poids, le deuxième matériau étant composé de 49% de bismuth en poids, de 21% d'indium en poids, de 18% de plomb en poids et de 12% d'étain en poids, le troisième matériau étant composé de 66,7% d'indium en poids et de 33,3% de bismuth en poids.

L'invention concerne également un procédé d'étalonnage en température d'un capteur de température à fibre optique, ledit procédé mettant en oeuvre un dispositif selon l'invention et comprenant les étapes consistant à :
- fournir un dispositif selon l'invention,
- équiper une fibre optique du capteur à fibre optique du dispositif, l'équipement de la fibre optique étant réalisé de manière à ce que la fibre optique soit disposée sur le passage du dispositif,
- mettre en oeuvre le moyen de transfert d'énergie du dispositif de manière à entraîner un changement d'état du premier point fixe à la première température prédéfinie,
- mettre en oeuvre le capteur à fibre optique et détecter un changement de température à un emplacement le long de la fibre optique,
- attendre une stabilisation de la température mesurée à l'emplacement de la fibre optique et étalonner la température mesurée à cet emplacement par rapport à la première température prédéfinie.

Un tel procédé permet d'étalonner en température de manière absolue un capteur à fibre optique, la température d'étalonnage étant fournie par la température du changement d'état le premier point fixe.

Il peut être prévu en outre les étapes consistant à :
- arrêter, ou modifier, la mise en oeuvre du moyen de transfert d'énergie de manière à arrêter, ou inverser, l'échange d'énergie thermique avec le premier point fixe, cet arrêt, ou inversion, étant réalisé de manière à ce que le premier point fixe atteigne une température correspondant à un changement d'état inverse, dite température d'état inverse,
- attendre la dissipation d'une partie de l'énergie échangée entre le premier point fixe et le moyen de transfert d'énergie, de manière à ce que le changement d'état du premier point fixe commence à s'inverser,
- attendre une stabilisation de la température mesurée à l'emplacement,
- corriger l'étalonnage de la température mesurée à l'emplacement à partir de la température de changement d'état inverse du premier point fixe.

De telles étapes permettent un étalonnage amélioré du capteur à fibre optique, l'étalonnage du capteur à fibre optique étant réalisé à la fois lors du changement d'état du matériau constituant le premier point fixe et lors du changement d'état inverse de ce même matériau.

L'invention concerne également un procédé d'étalonnage en distance d'un capteur à fibre optique, un tel procédé mettant en oeuvre un dispositif selon l'invention et comprenant les étapes consistant à :
- fournir un dispositif selon l'invention,
- équiper une fibre optique du capteur à fibre optique du dispositif, l'équipement de la fibre optique étant réalisé de manière à ce que la fibre optique soit disposée le long du passage du dispositif, cet équipement étant réalisé à un emplacement le long de la fibre optique,
- prévoir un moyen de mesure de la distance de l'emplacement du dispositif par rapport à une position de référence de la fibre optique, cette position de référence pouvant être notamment fournie par la position d'un autre dispositif selon l'invention ou la position d'une extrémité de la fibre optique,

- mettre en oeuvre le moyen de transfert d'énergie du dispositif de manière à entraîner un changement d'état du premier point fixe à la première température prédéfinie,
- mettre en oeuvre le capteur à fibre optique et détecter la position du changement de température à un emplacement le long de la fibre optique,
- étalonner en distance le capteur à fibre optique de manière à faire correspondre la position mesurée par le capteur et la position mesurée à partir du moyen de mesure de la distance.

Un tel procédé permet un étalonnage en distance du capteur de fibre optique.

### BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :
- la figure 1 illustre un dispositif d'étalonnage selon l'invention équipant une fibre optique d'un capteur de température à fibre optique,
- la figure 2 illustre un exemple de variation de la température appliquée par un système de chauffage du dispositif et de celle mesurée au niveau de l'un des points fixe,
- la figure 3 illustre un exemple d'installation comportant plusieurs dispositifs selon l'invention mis en oeuvre lors d'un étalonnage en distance d'un capteur thermique à fibre optique,
- la figure 4 illustre schématiquement une possibilité de l'invention selon laquelle le dispositif présente un système d'introduction latérale.

Des parties identiques, similaires ou équivalentes des différentes figures portent les mêmes références numériques de façon à faciliter le passage d'une figure à l'autre.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

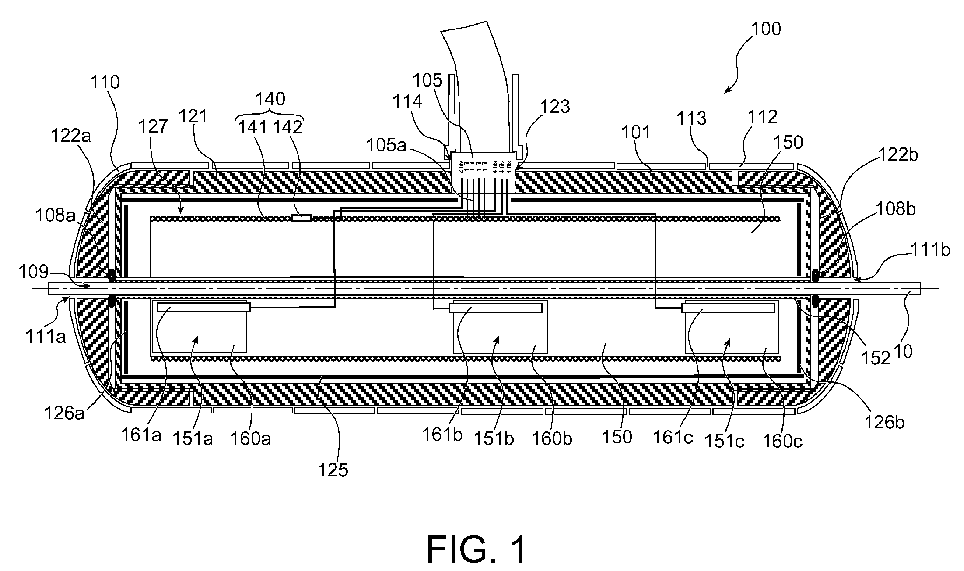

La figure 1 illustre un dispositif 100 d'étalonnage en température de capteur à fibre optique équipant la fibre optique 10 d'un capteur à fibre optique, non illustré autrement que par sa fibre optique 10.

Le dispositif 100 peut équiper tout type de capteur à fibre optique quelle que soit la méthodologie employée pour la mesure de température. Le capteur à fibre optique peut donc être aussi bien un capteur à fibre optique utilisant des réseaux de Bragg (FBG et LPG) que des capteurs à fibre optique utilisant des phénomènes de rétro-diffusion tels que les rétrodiffusions Raman, Brillouin et Rayleigh.

Pour un capteur à fibre optique utilisant des réseaux de Bragg, non illustrés, le dispositif est placé au niveau de l'un des réseaux de Bragg disposés dans la fibre optique 10.

Un tel dispositif 100 se présente sous la forme d'un corps de dispositif 101 comprenant :
- une cavité 127,
- un bloc en matériau conducteur thermique 150 délimitant trois chambres 151a,b,c, ledit bloc 150 comprenant un tube 152 délimitant un passage 109 pour la fibre optique 10 du capteur à fibre optique,
- un premier, un deuxième et un troisième bloc 160a,b,c dits points fixes disposés chacun dans l'une des chambres 151a,b,c du bloc de matériau conducteur 150, chacun des points fixes 160a,b,c étant réalisés dans un matériau présentant une température prédéfinie de changement d'état différentes de celles de celui des deux autres points fixes 160a,b,c,
- un double système de résistances de chauffage 140 agencé atour du bloc en matériau conducteur 150,
- un système de connexion 105 adapté pour relier le dispositif à un système de contrôle extérieur, non illustré.

Le bloc de matériau conducteur 150 et les trois points fixes 160,a,b,c forment chacun une portion du corps de dispositif 101.

Le corps de dispositif 101 comporte également une enveloppe extérieure 110 présentant une forme générale en cylindre de révolution avec les deux bases du cylindre bombées. Ainsi le corps de dispositif 101 présente une symétrie axiale selon un axe de révolution. Une telle forme permet au corps de dispositif 101 de ne pas présenter d'angle saillant, limitant ainsi les contraintes qui peuvent être appliquées par le dispositif 100 sur l'environnement de la fibre optique 10 lors d'une mise en oeuvre du dispositif 100 au cours de laquelle le dispositif 100 présente une dilatation de son corps de dispositif 101.

L'enveloppe 110 présente sur chacune de ces bases une entrée 111a,b pour la fibre optique 10, lesdites entrées 111a,b étant ménagées au niveau de l'intersection entre chacune des bases et l'axe de révolution 106.

Pour autoriser une dilatation thermique du corps de dispositif 101 sans endommagement de l'enveloppe 110, l'enveloppe 110 peut être, comme illustré sur la figure 1, constituée de plusieurs portions d'enveloppe 112, telles que des portions cylindriques, jointes entre elles par des joints de dilatation 113. Selon cette possibilité, les portions d'enveloppe 112 sont réalisées dans un matériau métallique, tel que de l'acier inoxydable.

Les joints de dilatation 113 peuvent être des rubans en matériau élastiquement déformable, tel qu'en élastomères, en silicone, en caoutchouc qu'il soit naturel ou synthétique, ou en métal.

Selon une autre possibilité, pour laquelle la dilatation reste contenue, l'enveloppe 110 peut être une enveloppe métallique simple sans présence de joints de dilatation. De façon identique à la précédente possibilité, le matériau métallique, selon cette possibilité peut être par exemple de l'acier inoxydable.

L'enveloppe 110 comporte un premier orifice de connexion 114 sur sa paroi latérale pour le placement du système de connexion 105.

Le corps comporte également des renforts 121, 122a,b de l'enveloppe permettant de rigidifier le corps de dispositif 101 afin que ce dernier puisse soutenir la pression pouvant exister dans l'environnement de la fibre optique 10. Pour obtenir une bonne rigidification, les renforts 121, 122a,b sont en contact avec l'enveloppe 110 logée par cette dernière.

Les renforts 121, 122a,b peuvent être, comme illustré sur la figure 1, au nombre de trois, un renfort central 121 délimitant la cavité 127, et deux renfort latéraux 122a,b.

Le renfort central 121 présente une forme générale cylindrique et présente un évidement également cylindrique formant la cavité 127. A chacune des extrémités du cylindre, au niveau de sa base correspondante, la paroi latérale du cylindre présente un filetage pour le montage d'un renfort latéral 122a,b.

Le renfort central 121 comporte un deuxième orifice de connexion 123 correspondant au même premier orifice de connexion 114 de l'enveloppe 110. Ainsi le système de connexion 105 est intégré au corps logé dans un creux formé par le premier et deuxième orifice de connexion 114, 123 en communication avec la cavité 127.

Le système de connexion 105 est agencé dans le corps de dispositif 100 de manière à ce que le creux formé par le premier et le deuxième orifice de connexion 114, 123 soit fermé et rendu étanche.

Chacune des bases du renfort central 121 présente une entrée pour la fibre optique 10 au niveau de l'intersection entre la base correspondante et l'axe de révolution 106.

Chacun des renforts latéraux 122a,b présente une forme générale de cylindre aplati creux, dont une base est bombée de façon identique à la base de l'enveloppe 110 à laquelle est associé ledit renfort latéral 122a,b, et dont l'autre base est ouverte. La paroi interne de chacun des renforts latéraux 122a,b présente un filetage complémentaire à celui du renfort central 121. Ainsi chacun des renforts latéraux 122a,b est vissé sur le renfort central 121.

Le corps de dispositif 101 comprend également deux joints d'étanchéités 108a,b pour rendre hermétique le corps de dispositif 101 lorsque la fibre optique 10 est équipée du dispositif 100, chaque joint d'étanchéité 108a,b correspondant à une entrée du renfort centrale 121 et à l'entrée du renfort latéral 122a,b qui est vissé au niveau de la base correspondant à ladite entrée du renfort central 121. Chacun des joints d'étanchéité 108a,b est comprimé dans le corps de dispositif 101 entre la base du renfort centrale 121 comportant l'entrée correspondant audit joint d'étanchéité 108a,b et le renfort latéral 122a,b correspondant. De cette façon la cavité 127 est rendue étanche, comme illustré sur la figure 1, lorsque le dispositif 100 équipe la fibre optique 10.

De manière à limiter les pertes thermiques lors de la mise en oeuvre du double système de résistances de chauffage 140, la cavité 127 peut comporter, comme illustré sur la figure 1, des écrans réfléchissants 125, 126a,b. De tels écrans réfléchissants 125, 126a,b permettent de réfléchir et de renvoyer en direction de la cavité 127 la partie de l'énergie thermique rayonnée par le double système de résistances de chauffage 140 qui n'est pas en direction du bloc de matériau conducteur150.

Les écrans réfléchissants 125, 126a,b peuvent être au nombre trois, un écran central 125 tapissant la face latérale de la paroi interne de la cavité 127 et deux écrans latéraux 126a,b tapissant chacune la surface d'une des deux bases de la cavité 127. Les deux écrans latéraux 126a,b présentent chacun un orifice de passage pour le tube 152, ledit orifice étant positionné au niveau de l'intersection dudit écran latéral 126a,b avec l'axe de révolution 106.

L'écran central 125 comporte un troisième orifice de connexion pour les connectiques 105a entre le système de connexion 114 et le double système de résistances de chauffage 140.

L'ensemble des écrans réfléchissants 125, 126a,b forment des moyens de confinement thermique agencés de manière à limiter les pertes thermiques lors d'un échange d'énergie thermique entre le double système de résistances de chauffage 140 et le bloc de matériau conducteur 150.

Le double système de résistances de chauffage 140 est un ensemble constitué de deux résistances de chauffage 141 et d'un mécanisme de régulation 142 de la puissance desdites résistances de chauffage 141. Le mécanisme de régulation 142 forme un moyen de régulation de l'énergie thermique échangée entre les résistances de chauffage 141 et les trois points fixes 160a,b,c.

Le double système de résistances de chauffage 140 est agencé autour du bloc en matériau de conducteur 150 de manière à ce que lorsque le double système de résistances de chauffage 140 est mis en oeuvre, le double système de résistances de chauffage échange de l'énergie thermique avec chacun des points fixes 160a,b,c au travers du bloc en matériau conducteur 150.

De cette manière le double système de résistances de chauffage 140 forme un moyen de transfert d'énergie thermique.

Le bloc en matériau conducteur 150 présente une forme générale sensiblement en cylindre de révolution avec le ménagement du passage 109 pour la fibre optique 10, sous la forme du tube 152, le long de son axe de révolution 106.

Le tube 152 présente une forme sensiblement tubulaire. Le tube 152 possède un diamètre intérieur sensiblement égal au diamètre extérieur de la fibre optique 10, ceci de manière à optimiser les échanges thermiques entre le tube 152 et la fibre optique 10.

Le tube 152 prolonge le reste du bloc de matériau conducteur 150 de part et d'autre jusqu'à l'orifice de passage du renfort central 121.

Le tube 152 est en contact thermique avec la fibre optique 10. La longueur du tube 152 recouvre une partie de la fibre optique 10 pour relier thermiquement la partie de la fibre optique 10 avec les points fixes 160a,b,c. Pour offrir un étalonnage de bonne qualité, la longueur du tube 152 est préférentiellement définie de manière que la longueur de la partie de fibre optique 10 recouverte par le tube 152 soit supérieure à la résolution spatiale du capteur à fibre optique. Ainsi selon ce principe, pour un capteur à fibre optique utilisant le phénomène de rétrodiffusion de Rayleigh, la longueur du tube doit être choisie supérieure à 3 mm tandis que pour un capteur mettant en oeuvre le phénomène de rétrodiffusion Raman, cette même longueur doit être choisie supérieure à 1 m.

Le tube 152 est préférentiellement réalisé dans le même matériau que le reste du bloc de matériau conducteur 150 mais peut également être réalisé dans un matériau différent sans que l'on sorte du cadre de l'invention.

De même si sur la figure 1, le tube 152 et le reste du bloc en matériau conducteur 150 sont deux éléments distincts, le bloc en matériau conducteur 150 peut être monobloc sans que l'on sorte du cadre de l'invention.

Les trois chambres 151a,b,c sont réparties le long du bloc conducteur 150 à proximité du tube 152, chacune des chambres 151a,b,c contenant l'un du premier, deuxième et troisième point fixes 160a,b,c.

Les matériaux constituant chacun des points fixes 160a,b,c sont choisis en fonction des températures de fonctionnement du capteur à fibre optique. Ainsi le tableau suivant illustre les matériaux étalons existant utilisables comme point fixes et leurs températures de changement d'état correspondant.

**Tab 1 : Matériaux étalons et la température de changement d'état correspondant**

| Matériau | Température de changement d'état en degré Celsius |
|---|---|
| Argon | -189,3442 |
| Mercure | -38,8344 |
| Eau | +0,01 |
| Gallium | +29,7646 |
| Indium | +156,5985 |
| Etain | +231,928 |
| Zinc | +419,527 |
| Aluminium | +660,323 |
| Argent | +961,78 |

Selon une application particulière dans laquelle le dispositif est adapté pour équiper un capteur à fibre optique destinée à travailler sur une plage de température allant de 0 à 100°C, il est nécessaire d'utiliser des matériaux dont la température de changement d'état est comprise dans cette plage. Dans le tableau 1 seul le gallium répond à ce critère.

Un tel dispositif 100 selon cette application particulière, comprend donc nécessairement, lorsqu'il est équipé de plusieurs points fixes 160a,b,c, certains de ces points fixes 160a,b,c réalisés dans des alliages de plusieurs éléments. Par exemple, un tel dispositif 100, comportant trois points fixes 160a,b,c, peut comporter les points fixes suivantes :
- le premier point fixe 160a comportant un matériau composé de 99,78% gallium en poids et de 0,22% bismuth en poids, dont la première température prédéfinie Tpd1 de changement d'état est de 29,7°C,
- le deuxième point fixe 160b comportant un matériau composé de 49% de bismuth en poids, de 21% d'indium en poids, de 18% de plomb en poids et de 12% d'étain en poids, dont la deuxième température prédéfinie Tpd2 de changement d'état est de 58°C,
- le troisième point fixe 160c comportant un matériau composé 66,7% d'indium en poids et de 33,3% de bismuth en poids, dont la troisième température prédéfinie de changement d'état est de 72,7°C.

Bien entendu, un dispositif 100 adapté pour la calibration d'une fibre optique 10 destinée à travailler sur une plage de température différente comporte des points fixes qui sont adaptés pour ladite plage de température ne ce limitant pas à ceux présents dans le tableau 1 et cités ci-dessus.

Chacune des chambres 151a,b,c contient en outre une sonde en température 161a,b,c adaptée pour mesurer la température du point fixe 160a,b,c correspondant. Chacune des sondes en température 161a,b,c est préférentiellement une sonde en température effectuant une mesure absolue de la température.

Chaque sonde en température 161a,b,c peut être par exemple, une sonde platine, un thermocouple, un capteur en température du type corde vibrante ou tout autre système de mesure connu de l'homme du métier et pouvant être adapté pour mesurer la température d'un point fixe 160a,b,c et/ou du bloc de matériau conducteur 150.

Chaque sonde en température 161a,b,c forme un moyen de mesure de température agencé pour mesuré la température d'un point fixe 160a,b,c.

Chaque sonde en température 161a,b,c, chaque résistance de chauffage 141 et le mécanisme de régulation 142 sont connectés au système de connexion au moyen de la connectique 105a.

Un tel dispositif 100 peut donc équiper une fibre optique 10 pour permettre l'étalonnage du capteur à fibre optique.

L'installation du dispositif 100 sur la fibre optique 10, avec un dispositif 100 selon ce mode de réalisation, est préférentiellement réalisée lors de l'installation de la fibre optique 10. En effet, pour installer le dispositif 100, la fibre optique 10 doit être passée dans le passage 109, ce qui demande un accès à au moins la longueur de fibre optique 10 allant d'une des extrémités de la fibre optique 10 à l'emplacement sur la fibre optique 10 du dispositif 100.

Néanmoins, il est également possible d'installer le dispositif 100 sur une fibre optique 10 déjà en place. Une telle installation peut être réalisée avec un accès uniquement à la zone de la fibre optique 10 qui doit être équipée.

Un tel dispositif peut être mis en oeuvre lors de l'étalonnage d'un capteur à fibre optique à partir d'un procédé comprenant, pour juste l'utilisation du premier point fixe 160a correspondant à la température prédéfinie la plus basse, les étapes consistant à :
- mettre en oeuvre le double système de résistances de chauffage 140, le mécanisme de régulation 142 étant commandé de manière à appliquer une température suffisante pour entraîner un changement d'état du premier point fixe 160a à la première température prédéfinie,
- mettre en oeuvre le capteur à fibre optique et détecter un changement de température à un emplacement le long de la fibre optique 10, ledit emplacement devant correspondre à celui du dispositif 100,
- attendre une stabilisation de la température mesurée à l'emplacement de la fibre optique 10 et enregistrer la température mesurée à cet emplacement,
- attendre que la température mesurée à l'emplacement de la fibre optique 10 recommence à monter, indiquant ainsi que le changement d'état du premier point fixe 160a est totalement réalisé,
- réduire la puissance appliquée par le double système de résistances de chauffage 140, ceci au moyen du mécanisme de régulation 142,
- attendre une réduction de la température mesurée à l'emplacement de la fibre optique 10, et attendre la stabilisation qui s'en suit, cette stabilisation correspondant au changement d'état inverse du premier point fixe 160a, et enregistrer la température correspondante,
- utiliser les températures mesurées pendant le changement d'état et le changement d'état inverse pour calibrer les mesures de température obtenues à partir du capteur à fibre optique.

Lors de la mise en oeuvre de ce procédé, de manière à appliquer à la fibre optique 10 la température prédéfinie sur une durée de temps importante, limitant ainsi les risques que la stabilisation thermique de la fibre optique 10 ne soit pas atteinte, le mécanisme de régulation 142 peut être adapté pour appliquer une température légèrement supérieure à celle de la première température prédéfinie.

De même lors de la réduction de la puissance appliquée, le mécanisme de régulation 142 peut être adapté pour appliquer une température légèrement inférieure à celle de la température de changement d'état inverse du premier point fixe 160a.

On entend par une température légèrement supérieure ou inférieure à une température de référence, une température dont le gradient avec la température de référence est de l'ordre de 0,1°C, préférentiellement inférieure à 0,1°C.

Un procédé avec un seul point fixe 160a permet de corriger un simple décalage en température. Un meilleur étalonnage peut être obtenu en effectuant un étalonnage selon un procédé similaire utilisant plusieurs points fixes.

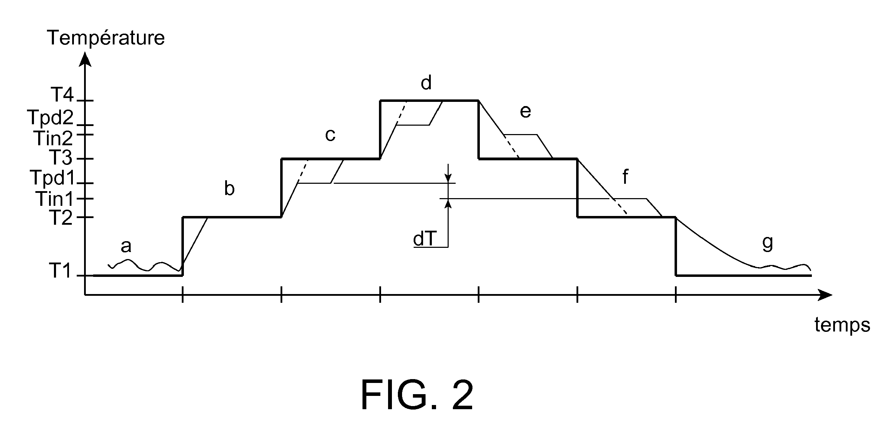

Ainsi, pour un dispositif 100 comportant trois points fixes 160a,b,c, le dispositif 100 peut être mise en oeuvre en appliquant successivement par le réglage du mécanisme de régulation 142, et comme illustré sur la figure 2, des températures légèrement supérieures à la première température prédéfinie Tpd1, puis à la deuxième température prédéfinie Tpd2 et enfin la troisième température prédéfinie.

De cette manière la température de stabilisation à l'emplacement de la fibre optique passe successivement à la température de changement d'état du premier point fixe 160a, à la température de changement d'état du deuxième point fixe 160b et à la température du changement d'état du troisième point fixe 160c.

De même que pour le procédé mettant en oeuvre uniquement le premier point fixe 160a, il est possible de commander le mécanisme de régulation 142 de manière à ce que le double système de résistances de chauffage 140 applique, lors du refroidissement du dispositif 101 successivement une température faiblement inférieure à celle du changement d'état inverse du troisième point fixe 160c, du deuxième point fixe 160b, et le premier point fixe 160a.

De cette manière la température de stabilisation à l'emplacement de la fibre optique 10 passe successivement à la troisième température de changement d'état inverse du troisième point fixe 160c, la deuxième température de changement d'état inverse Tin2 du deuxième point fixe 160b et la première température de changement d'état inverse du premier point fixe 160a.

Ces différentes températures étant mesurées par la mise en oeuvre du capteur à fibre optique, il est possible d'étalonner le capteur à fibre optique en comparant les températures mesurées avec les températures de changement d'état des différents points fixes 160a,b,c.

La figure 2, illustre un exemple de mesures de températures T au cours du temps t obtenues lors de la mise en oeuvre d'un procédé d'étalonnage avec l'activation de deux points fixes 160a,b, la ligne tiretée correspondant à la température de consigne du mécanisme de régulation 142 et a ligne pleine les températures mesurées par le capteur à fibre optique à l'emplacement du dispositif 100.

On peut ainsi voir sur la figure 2, que dans une première étape référencée a) dans laquelle le double système de résistances de chauffage 140 n'est pas activé, le capteur à fibre optique mesure les variations de température à l'emplacement du dispositif 100.

A l'étape b), le dispositif 101 est mis en oeuvre avec le mécanisme de régulation programmé de manière à ce que le double système de résistances de chauffage 140 applique au bloc de matériau conducteur 150 une température T2 inférieure à la première température prédéfinie Tpd1. Le bloc de matériau conducteur 140 prend alors la température de T2, ce qui est confirmé par la température mesurée par le capteur de température à fibre optique.

A l'étape c), le mécanisme de régulation 142 est programmé de manière à ce que le double système de résistances de chauffage 140 applique au bloc de matériau conducteur 150 une température T3 supérieure à la première température prédéfinie Tpd1 et inférieure à la deuxième température prédéfinie Tpd2. Ainsi, le double système de résistances de chauffage 140 transmet au premier point fixe 160a une énergie thermique suffisante pour en entraîner le changement d'état à la première température prédéfinie Tpd1. Pendant le changement d'état, l'énergie dissipée par le changement d'état du premier point fixe 160a maintien le bloc en matériau conducteur 150 à la première température prédéfinie Tpd1 comme illustré sur la figure 2. Cette première température, correspondant à une stabilisation de la température pendant l'ensemble du phénomène de changement d'état, est mesurée par le capteur à fibre optique. Une fois le changement d'état du premier point fixe 160a complété, le bloc en matériau conducteur 150 prend la température T3.

A l'étape d), le mécanisme de régulation est programmé de manière à ce que le double système de résistances de chauffage 140 applique au bloc de matériau conducteur 150 une température T4 supérieure à la deuxième température prédéfinie Tpd2. Il en résulte, de façon similaire à l'étape c) concernant le premier point fixe 160a, qu'un changement d'état du deuxième point fixe 160b, correspondant à une stabilisation de la température mesurée par le capteur à fibre optique, est détecté et la température correspondante est alors mesurée par le capteur à fibre optique.

Une fois que le changement d'état du deuxième point fixe 160b est complété, le mécanisme de régulation est programmé, pendant l'étape e) de manière à ce que le double système de résistances de chauffage 140 réapplique au bloc de matériau conducteur 150 la température T3, cette température étant également inférieure à la deuxième température de changement d'état inverse Tin2 du deuxième point fixe 160b. L'abaissement de température du bloc de matériau conducteur 150 qui s'ensuit entraîne en changement d'état inverse du deuxième point fixe 160b qui retrouve son état initial. Pendant le changement d'état inverse, l'énergie fournie par le changement d'état du deuxième point fixe 160b maintien le bloc en matériau conducteur 150 à la deuxième température de changement d'état inverse Tin2 du deuxième point fixe 160b, cette deuxième température Tin2 étant, comme illustré sur la figure 2, inférieure à celle de la deuxième température prédéfinie Tpd2.

Cette même procédure est également employée à l'étape f), avec la programmation du mécanisme de régulation à la température T2. Lors de cette étape le premier point fixe 160a retrouve son état initial en passant par un changement d'état inverse. Pendant ce changement d'état inverse du premier point fixe 160a, le bloc conducteur 150, et donc la fibre optique, prennent la première température de changement d'état inverse Tin1 du premier point fixe 160a.

Une fois que le changement d'état inverse du premier point fixe 160a est complété, la mise en oeuvre du double système de résistances de chauffage 140 est arrêtée. Les températures mesurées par le capteur à fibre optique à chacun des changements d'état et des changements d'état inverses peuvent être employées pour étalonner le capteur à fibre optique. En effet, les températures des changements d'état Tpd1, Tpd2 et des changements d'état inverse Tin1, Tin2 sont définies lors de la fabrication du dispositif par le choix des matériaux constituant chacun des points fixes 160a,b,c, et sont donc des caractéristiques connues et invariables du dispositif 100.

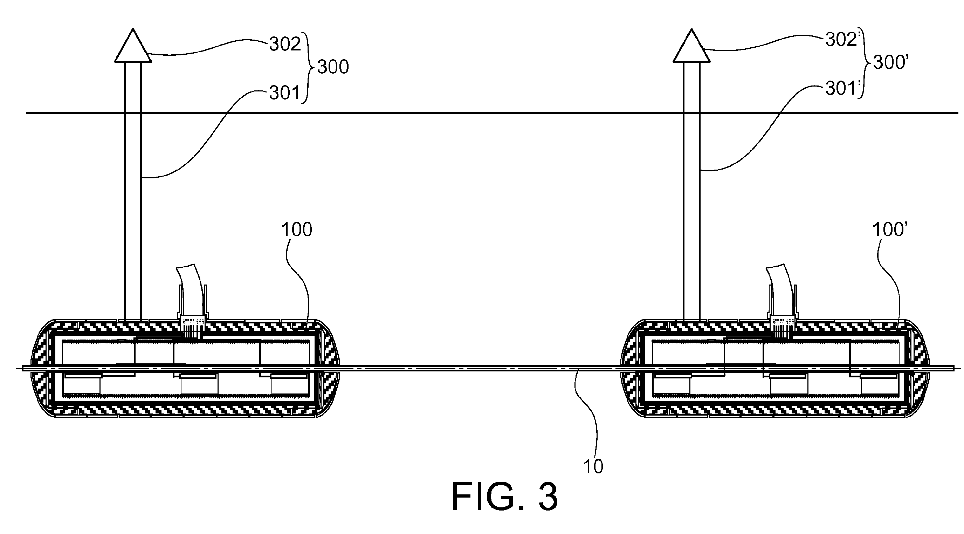

Le dispositif 100 peut également être mis en oeuvre au travers d'un procédé d'étalonnage en distance du capteur à fibre optique. Une telle mise en oeuvre est généralement réalisée pour étalonner la distance entre deux dispositifs 100, 100' (voir figure 3) le long de la fibre optique et nécessite de prévoir des moyens de mesure de la distance entre les deux dispositifs 100, 100' qui soit accessible à la surface de l'ouvrage sans modification de l'emplacement de la fibre optique. De tels moyens de mesure 300, 300' de la distance peuvent être, par exemple, pour chacun des dispositifs 100, 100', un poteau solidaire 301,301' à l'enveloppe 110 du dispositif 100, 100' correspondant. Chaque poteau 301, 301', faisant saillie de la surface de l'ouvrage lorsque le dispositif correspondant équipe la fibre optique 10 du capteur à fibre optique surveillant ledit ouvrage. Selon cet exemple, chaque poteau 301, 301' peut comporter à son extrémité faisant saillie un prisme réflecteur 302, 302' compatible avec un tachéomètre.

Ainsi il est possible de surveiller à la surface le déplacement de chaque dispositif 100, 100' les uns par rapport aux autres et/ou par rapport à l'une des extrémités de la fibre optique, si celles-ci comporte également un moyen de mesure de la distance 300, 300'.

Un tel procédé comprend, lorsqu'il est utilisé pour étalonner la distance entre deux dispositifs 100, 100' installés le long de la fibre optique 10, tel qu'illustré sur la figure 3, les étapes consistant à :
- mettre simultanément en oeuvre le mécanisme de régulation 142 du premier et du deuxième dispositif 100, 100' de manière à entraîner un changement d'état pour chacun de l'un de leurs points fixes 160a,b,c,
- mettre en oeuvre le capteur de température à fibre optique et détecter la position des changements de température aux emplacements le long de la fibre optique 10 correspondant au premier et au deuxième dispositif 100, 100',
- étalonner en distance le capteur à fibre optique de manière à faire correspondre la distance entre les deux dispositifs 100, 100' mesurée par le capteur à fibre optique et la distance mesurée à partir du moyen de mesure de la distance 300, 300'.

Pour bien différencier le premier dispositif 100 du deuxième dispositif 100' il est possible de mettre en oeuvre le mécanisme de régulation de chacun des dispositifs 100, 100' à une température correspondant à un point fixe 160a,b,c différent de celui mis en oeuvre par l'autre dispositif 100, 100'.

Il est également possible de réaliser le procédé d'étalonnage en température et celui d'étalonnage en distance simultanément l'un à l'autre. Selon cette possibilité, les deux dispositifs 100, 100' sont mis en oeuvre simultanément pour un étalonnage en température, ainsi la détection des deux emplacements de la variation de température permet l'étalonnage en distance et les valeurs de température correspondant à chacun des changements d'état des points fixes 160,a,b,c permettant l'étalonnage en température.

Selon le mode de réalisation décrit ci-dessus, le dispositif 100, doit être installé sur la fibre optique 10 en passant la fibre optique dans le passage 109. Ceci demande donc un accès à la fibre d'une de ces extrémités vers l'emplacement sur lequel le dispositif 100 doit être installé et donc plus particulièrement adapté pour équiper la fibre optique lors de sa pose sur un ouvrage.

Il est également possible d'équiper la fibre optique 10 du dispositif 100 sans avoir accès à l'une de ses deux extrémités en découpant la fibre optique 10 à proximité de l'emplacement prévu sur la fibre optique 10, définissant ainsi deux portions de fibre optique 10, dont une comporte l'emplacement. La portion de fibre optique 10 comportant l'emplacement peut ensuite être introduite dans le passage 109. Le dispositif 100 en place, les deux portions sont soudées l'une à l'autre pour que la fibre optique 10 retrouve son intégrité.

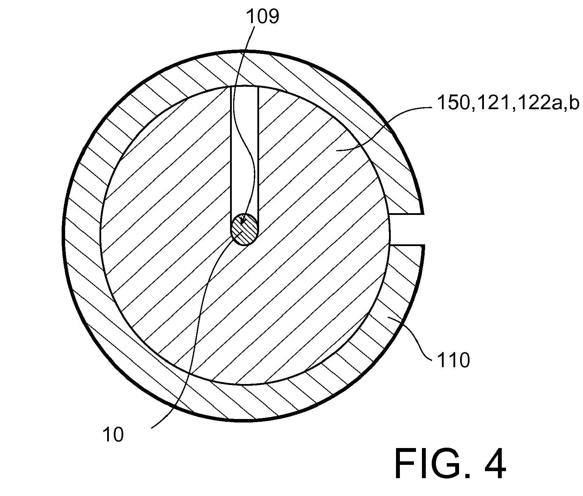

Selon une variante de l'invention schématisée sur la figure 4, le passage 109 peut être adapté pour permettre une installation amovible du dispositif.

Selon cette variante, le passage 109 ménagé dans le bloc de matériau conducteur 150 est ménagé le long de l'axe de révolution 106, dit également axe longitudinal, sur toute sa longueur une première fente d'introduction longitudinale de la fibre optique 10 étant prévue pour mettre en communication le passage 109 avec l'enveloppe 110. L'enveloppe 110 est mobile en rotation autour des renforts 121,122a,b et selon l'axe de révolution. L'enveloppe 110 présentant elle-même une seconde fente d'introduction, il est possible de mettre en communication la première fente d'introduction avec la seconde fente d'introduction.

Ainsi un dispositif 100 selon cette variante permet une installation de la fibre optique 10 au travers de la première et de la seconde fente d'introduction. Une rotation de l'enveloppe 110 permet, selon cette possibilité de fermer le chemin d'introduction en maintenant la fibre optique 10 dans le passage 109. Le démontage de la fibre optique 10 peut être réalisé par une opération inverse.

La première et la seconde fente d'introduction avec le montage en rotation de l'enveloppe 110 sur les renforts 121, 122a,b forment un système d'introduction latérale adapté pour autoriser l'introduction latérale de la fibre optique 10 dans le passage 109.

Il est également à noter que dans le mode de réalisation décrit ci-dessus, si le passage 109 dans le dispositif 100 est formé au moyen d'un tube traversant 152 du bloc de matériau conducteur 150, celui-ci peut prendre une autre forme comme un passage 109 s'enroulant autour du bloc de matériau conducteur 150 ceci sans que l'on sorte du cadre de l'invention.

De même, selon une autre possibilité de l'invention non illustrée, le moyen de transfert d'énergie thermique peut être fournis par un système de transfert d'énergie autre qu'un système de résistances thermiques 141 disposé autour du bloc conducteur 150, tel qu'un module Peltier, un système de réfrigération ou un ensemble de résistances thermiques intégrées dans le bloc de matériau conducteur 150.

Enfin, selon une possibilité de l'invention non illustrée, le dispositif 100 peut comporter en lieu et place des sondes de température 161a,b,c agencées dans chacune des chambres 151a,b,c du bloc de matériau conducteur 150, une seule sonde de température agencée dans le bloc de matériau conducteur 150 pour mesurer la température du bloc de matériau conducteur 150, ceci sans que l'on sorte du cadre de l'invention telle que définie dans les revendications.

## Revendications

1. Dispositif (100) d'étalonnage en température d'un capteur de température à fibre optique destiné à équiper une fibre optique (10) d'un capteur de température à fibre optique, ledit dispositif (100) comportant :
- un corps de dispositif (101) présentant un passage (109) pour la fibre optique (10), et
- un moyen de transfert d'énergie thermique (161a),
le dispositif (100) **étant caractérisé en ce qu**'il comporte au moins une portion (160a) dite premier point fixe, réalisée dans un premier matériau présentant au moins une première température prédéfinie (Tpd 1) de changement d'état, ledit premier point fixe (160a) étant destiné à être en liaison thermique avec la fibre optique (10) lorsque le dispositif (100) équipe la fibre optique (10), le moyen de transfert thermique (161a)
étant agencé dans le corps de dispositif (101) de manière à ce que lors de son actionnement le moyen de transfert thermique échange de l'énergie thermique avec le premier point fixe (160a) pour en entraîner un changement d'état à la première température prédéfinie (Tpd1).

2. Dispositif (100) selon la revendication 1, dans lequel il est prévu en outre une portion en matériau conducteur (150) thermique, ladite portion (150) étant agencée dans le corps de dispositif (101) de manière à fournir une liaison thermique entre le premier point fixe (160a) et la fibre optique (10) lorsque le dispositif (100) équipe la fibre optique.

3. Dispositif (100) selon la revendication 2, dans lequel la portion en matériau conducteur (150) est de forme allongée, le passage (109) étant un passage longitudinal ménagé dans ladite portion en matériau conducteur (150).

4. Dispositif (100) selon la revendication 3, dans lequel le passage (109) présente un système d'introduction latérale adapté pour autoriser l'introduction latérale d'une fibre optique (10) dans le passage (109), le système d'introduction étant en outre adapté pour maintenir en place la fibre optique (10) après son introduction dans le passage (109).

5. Dispositif (100) selon l'une quelconque des revendications précédentes, dans lequel il est prévu en outre un moyen de mesure de température agencé pour mesurer la température de la portion en matériau conducteur (150) et/ou du premier point fixe (160a), ledit moyen de mesure étant préférentiellement adapté pour réaliser une mesure de température absolue.

6. Dispositif (100) selon l'une quelconque des revendications précédentes, dans lequel le premier point fixe (160a) est destiné à être en liaison thermique avec la fibre optique (10) sur une partie de la fibre optique (10), ladite liaison thermique étant adaptée de manière à ce que la longueur de la partie de la fibre optique (10) en liaison thermique avec le premier point fixe (160a) est supérieure ou égale à la résolution spatiale du capteur de température à fibre optique.

7. Dispositif (100) selon l'une quelconque des revendications précédentes, dans lequel le moyen de transfert d'énergie thermique comprend un moyen de régulation de l'énergie thermique adapté pour réguler l'énergie thermique échangée entre le moyen de transfert d'énergie thermique et le premier point fixe (160a).

8. Dispositif (100) selon l'une quelconque des revendications précédentes, dans lequel des moyens de confinement thermique sont prévus, lesdits moyens de confinement étant agencés de manière à limiter les pertes thermiques lors de l'échange de l'énergie thermique entre le moyen de transfert d'énergie thermique et le premier point fixe (160a).

9. Dispositif (100) selon l'une des revendications précédentes, dans lequel il également prévu au moins une portion (160b), dite deuxième point fixe, réalisée dans un deuxième matériau présentant au moins une deuxième température prédéfinie de changement d'état (Tpd2) différente de la première température prédéfinie (Tpd1), ledit deuxième point fixe (160b) étant destiné à être en liaison thermique avec la fibre optique (10) lorsque le dispositif (100) équipe la fibre optique (10) et le moyen de transfert thermique étant agencé dans le corps de dispositif (101) de manière à ce que lors de son actionnement le moyen de transfert thermique échange de l'énergie thermique avec le deuxième point fixe (106b) pour en entraîner un changement d'état à la deuxième température prédéfinie (Tpd2).

10. Dispositif selon la revendication 9, dans lequel il également prévu au moins une portion (160c), dite troisième point fixe, réalisée dans un troisième matériau présentant au moins une troisième température prédéfinie de changement d'état différente de la première et de la deuxième température prédéfinie (Tpd1, Tpd2), ledit troisième point fixe (160c) étant destiné à être en liaison thermique avec la fibre optique (10) lorsque le dispositif (100) équipe la fibre optique (10) et le moyen de transfert thermique étant agencé dans le corps de dispositif (101) de manière à ce que lors de son actionnement le moyen de transfert thermique échange de l'énergie thermique avec le troisième point fixe (106c) pour en entraîner un changement d'état à la troisième température prédéfinie, le premier matériau étant composé de 99,78% de gallium en poids et de 0,22% de bismuth en poids, le deuxième matériau étant composé de 49% de bismuth en poids, de 21% d'indium en poids, de 18% de plomb en poids et de 12% d'étain en poids, le troisième matériau étant composé de 66,7% d'indium en poids et de 33,3% de bismuth en poids.

11. Procédé d'étalonnage en température d'un capteur de température à fibre optique **caractérisé en ce qu'il** met en oeuvre un dispositif (100) selon l'une quelconque des précédentes revendications et **en ce qu'**il comprend les étapes consistant à :
- fournir un dispositif (100) selon l'une quelconque des précédentes revendications,
- équiper une fibre optique (10) du capteur à fibre optique du dispositif (100), l'équipement de la fibre optique (10) étant réalisé de manière à ce que la fibre optique (10) soit disposée le long du passage (109),
- mettre en oeuvre le moyen de transfert d'énergie du dispositif (100) de manière à entrainer un changement d'état du premier point fixe (106a) à la première température prédéfinie (Tpd1),
- mettre en oeuvre le capteur à fibre optique et détecter un changement de température à un emplacement le long de la fibre optique (10),
- attendre une stabilisation de la température mesurée à l'emplacement de la fibre optique (10) et étalonner la température mesurée à cet emplacement par rapport à la première température prédéfinie (Tpd1).

12. Procédé selon la revendication 11, dans lequel il est prévu en outre les étapes consistant à :
- arrêter, ou modifier, la mise en oeuvre du moyen de transfert d'énergie de manière à arrêter, ou à inverser, l'échange d'énergie thermique avec le premier point fixe (160a), cet arrêt, ou inversion, étant réalisé de manière à ce que le premier point fixe (160a) atteigne une température correspondant à un changement d'état inverse,
- attendre la dissipation d'une partie de l'énergie échangée entre le premier point fixe (160a) et le moyen de transfert d'énergie, de manière à ce que le changement d'état du premier point fixe (160a) commence à s'inverser,
- attendre une stabilisation de la température mesurée à l'emplacement,
- corriger l'étalonnage de la température mesurée à l'emplacement à partir de la température de changement d'état inverse du premier point fixe (160a).

13. Procédé d'étalonnage en distance d'un capteur de température à fibre optique **caractérisé en ce qu'il** met en oeuvre un dispositif selon l'une quelconque des revendications 1 à 10 et **en ce qu'**il comprend les étapes consistant à :
- fournir un dispositif (100) selon l'une quelconque des revendications 1 à 9,
- équiper une fibre optique (10) du capteur à fibre optique du dispositif (100), l'équipement de la fibre optique (10) étant réalisé de manière à ce que la fibre optique (10) soit disposée le long du passage (109), cet équipement étant réalisé à un emplacement le long de la fibre optique (10),
- prévoir un moyen de mesure de distance (300) de l'emplacement du dispositif (10) par rapport à une position de référence de la fibre optique (10), cette position de référence pouvant être notamment fournie par la position d'un autre dispositif (100') selon l'une des revendications 1 à 9 ou la position d'une extrémité de la fibre optique (10),
- mettre en oeuvre le moyen de transfert d'énergie du dispositif (100) de manière à entraîner un changement d'état du premier point fixe (160a) à la première température prédéfinie (Tpd1),
- mettre en oeuvre le capteur à fibre optique et détecter la position du changement de température à un emplacement le long de la fibre optique (10),
- étalonner en distance le capteur à fibre optique de manière à faire correspondre la position mesurée par le capteur et la position mesurée à partir du moyen de mesure de la distance (300).

## Patentansprüche

1. Vorrichtung (100) zur Temperaturkalibrierung eines faseroptischen Temperatursensors, die dazu ausgelegt ist, zur Ausstattung einer optischen Faser (10) eines faseroptischen Temperatursensors zu gehören, wobei die Vorrichtung (100) umfasst:
- einen Vorrichtungskörper (101), der einen Durchgang (109) für die optische Faser (10) aufweist, und
- eine Einrichtung zur Übertragung von thermischer Energie (161 a),
wobei die Vorrichtung (100) **dadurch gekennzeichnet ist, dass** sie wenigstens einen Bereich (160a) umfasst, genannt erster fester Punkt, der aus einem ersten Material realisiert ist, welches wenigstens eine erste vordefinierte Zustandsänderungstemperatur (Tpd1) aufweist, wobei der erste feste Punkt (160a) dazu ausgelegt ist, in thermischer Verbindung mit der optischen Faser (10) zu sein, wenn die Vorrichtung (100) zur Ausstattung der optischen Faser (10) gehört, wobei die thermische Übertragungseinrichtung (161 a) in dem Vorrichtungskörper (101) derart angeordnet ist, dass die thermische Übertragungseinrichtung während ihrer Betätigung thermische Energie mit dem ersten festen Punkt (160a) austauscht, um bei ihm eine Zustandsänderung bei der ersten vordefinierten Temperatur (Tpd1) zu bewirken.

2. Vorrichtung (100) nach Anspruch 1, bei der ferner ein Bereich aus thermisch leitendem Material (150) vorgesehen ist, welcher Bereich (150) derart in dem Vorrichtungskörper (101) angeordnet ist, dass eine thermische Verbindung zwischen dem ersten festen Punkt (160a) und der optischen Faser (10) bewirkt wird, wenn die Vorrichtung (100) zur Ausstattung der optischen Faser gehört.

3. Vorrichtung (100) nach Anspruch 2, bei dem der Bereich aus leitendem Material (150) eine längliche Form aufweist, wobei der Durchgang (109) ein longitudinaler Durchgang ist, der in dem Bereich aus leitendem Material (150) vorgesehen ist.

4. Vorrichtung (100) nach Anspruch 3, bei dem der Durchgang (109) ein laterales Einführungssystem aufweist, das dazu ausgelegt ist, die laterale Einführung einer optischen Faser (10) in den Durchgang (109) zu ermöglichen, wobei das Einführungssystem ferner dazu ausgelegt ist, die optische Faser (10) nach ihrer Einführung in den Durchgang (109) an ihrem Platz zu halten.

5. Vorrichtung (100) nach einem der vorhergehenden Ansprüche, bei der ferner eine Temperaturmesseinrichtung vorgesehen ist, die dazu ausgelegt ist, die Temperatur des Bereichs aus leitendem Material (150) und/oder des ersten festen Punkts (160a) zu messen, wobei die Messeinrichtung vorzugsweise dazu ausgelegt ist, eine absolute Temperaturmessung zu realisieren.

6. Vorrichtung (100) nach einem der vorhergehenden Ansprüche, bei der der erste feste Punkt (160a) dazu ausgelegt ist, in thermischer Verbindung mit der optischen Faser (10) auf einem Teil der optischen Faser (10) zu sein, wobei die thermische Verbindung derart ausgelegt ist, dass die Länge des Teils der optischen Faser (10) in thermischer Verbindung mit dem ersten festen Punkt (160a) größer oder gleich der räumlichen Auflösung des faseroptischen Temperatursensors ist.

7. Vorrichtung (100) nach einem der vorhergehenden Ansprüche, bei der die Einrichtung zur Übertragung thermischer Energie eine Einrichtung zur Regelung thermischer Energie umfasst, die dazu ausgelegt ist, die thermische Energie zu regeln, die zwischen der Einrichtung zur Übertragung thermischer Energie und dem ersten festen Punkt (160a) ausgetauscht wird.

8. Vorrichtung (100) nach einem der vorhergehenden Ansprüche, bei der Mittel zur thermischen Isolierung vorgesehen sind, welche Isolierungsmittel dazu ausgelegt sind, die thermischen Verluste während des Austauschs von thermischer Energie zwischen der Einrichtung zur Übertragung thermischer Energie und dem ersten festen Punkt (160a) zu begrenzen.

9. Vorrichtung (100) nach einem der vorhergehenden Ansprüche, bei der ferner wenigstens ein Bereich (160b) vorgesehen ist, genannt zweiter fester Punkt, der aus einem zweiten Material realisiert ist, welches wenigstens eine zweite vordefinierte Zustandsänderungstemperatur (Tpd2) aufweist, die von der ersten vordefinierten Temperatur (Tpd1) verschieden ist, wobei der zweite feste Punkt (160b) dazu ausgelegt ist, in thermischer Verbindung mit der optischen Faser (10) zu sein, wenn die Vorrichtung (100) zur Ausstattung der optischen Faser (10) gehört, und wobei die Einrichtung zur Übertragung thermischer Energie in dem Vorrichtungskörper (101) derart angeordnet ist, dass die thermische Übertragungseinrichtung während ihrer Betätigung thermische Energie mit dem zweiten festen Punkt (106b) austauscht, um bei ihm eine Zustandsänderung bei der zweiten vordefinierten Temperatur (Tpd2) zu bewirken.

10. Vorrichtung nach Anspruch 9, bei der ferner ein Bereich (160c) vorgesehen ist, genannt dritter fester Punkt, der aus einem dritten Material realisiert ist, welches wenigstens eine dritte vordefinierte Zustandsänderungstemperatur aufweist, die von der ersten und von der zweiten vordefinierten Temperatur (Tpd1, Tpd2) verschieden ist, wobei der dritte feste Punkt (160c) dazu ausgelegt ist, in thermischer Verbindung mit der optischen Faser (10) zu sein, wenn die Vorrichtung (100) zur Ausstattung der optischen Faser (10) gehört, und wobei die thermische Übertragungseinrichtung in dem Gehäusekörper (101) derart angeordnet ist, dass die thermische Übertragungseinrichtung während ihrer Betätigung thermische Energie mit dem dritten festen Punkt (106c) austauscht, um bei ihm eine Zustandsänderung bei der dritten vordefinierten Temperatur zu bewirken, wobei das erste Material aus 99,78 Gewichts-% Gallium und 0,22 Gewichts-% Wismut zusammengesetzt ist, das zweite Material aus 49 Gewichts-% Wismut, 21 Gewichts-% Indium, 18 Gewichts-% Blei und 12 Gewichts-% Zinn zusammengesetzt ist, und das dritte Material aus 66,7 Gewichts-% Indium und 33,3 Gewichts-% Wismut zusammengesetzt ist.

11. Verfahren zur Temperaturkalibrierung eines faseroptischen Temperatursensors, **dadurch gekennzeichnet, dass** es eine Vorrichtung (100) nach einem der vorhergehenden Ansprüche verwendet, und dass es die folgenden Schritte umfasst:
- Bereitstellen einer Vorrichtung (100) nach einem der vorhergehenden Ansprüche,
- Ausstatten einer optischen Faser (10) des faseroptischen Sensors mit der Vorrichtung (100), wobei das Ausstatten der optischen Faser (10) derart realisiert wird, dass die optische Faser (10) entlang des Durchgangs (109) angeordnet wird,
- Einsetzen der Energieübertragungseinrichtung der Vorrichtung (100) derart, dass eine Zustandsänderung des ersten festen Punkts (106a) bei der ersten vordefinierten Temperatur (Tpd1) bewirkt wird,
- Einsetzen des faseroptischen Sensors und Erfassen einer Temperaturänderung an einer Stelle entlang der optischen Faser (10),
- Abwarten einer Stabilisierung der an der Stelle der optischen Faser (10) gemessenen Temperatur und Kalibrieren der gemessenen Temperatur an dieser Stelle bezüglich der ersten vordefinierten Temperatur (Tpd1).

12. Verfahren nach Anspruch 11, bei dem ferner die folgenden Schritte vorgesehen sind:
- Anhalten oder Modifizieren des Einsatzes der Energieübertragungseinrichtung derart, dass der Austausch thermischer Energie mit dem ersten festen Punkt (160a) angehalten oder invertiert wird, wobei dieses Anhalten oder diese Invertierung derart realisiert wird, dass der erste feste Punkt (160a) eine Temperatur erreicht, die einer inversen Zustandsänderung entspricht,
- Abwarten der Ausbreitung eines Teils der Energie, die zwischen dem ersten festen Punkt (160a) und der Energieübertragungseinrichtung ausgetauscht wird, derart, dass die Zustandsänderung des ersten festen Punkts (160a) beginnt, sich zu invertieren,
- Abwarten einer Stabilisierung der an der Stelle gemessenen Temperatur,
- Korrigieren der Kalibrierung der an der Stelle gemessenen Temperatur ausgehend von der Temperatur der inversen Zustandsänderung des ersten festen Punkts (160a).

13. Verfahren zum Distanzkalibrieren eines faseroptischen Temperatursensors, **dadurch gekennzeichnet, dass** es eine Vorrichtung nach einem der Ansprüche 1 bis 10 verwendet, und dass es die folgenden Schritte umfasst:
- Bereitstellen einer Vorrichtung (100) nach einem der Ansprüche 1 bis 9,
- Ausstatten einer optischen Faser (10) des faseroptischen Sensors mit der Vorrichtung (100), wobei das Ausstatten der optischen Faser (10) derart realisiert wird, dass die optische Faser (10) entlang des Durchgangs (109) angeordnet wird, wobei dieses Ausstatten an einer Stelle entlang der optischen Faser (10) realisiert wird,
- Bereitstellen einer Einrichtung zur Messung der Distanz (300) der Stelle der Vorrichtung (10) bezüglich einer Referenzposition der optischen Faser (10), wobei diese Referenzposition insbesondere durch die Position einer weiteren Vorrichtung (100') nach einem der Ansprüche 1 bis 9 oder die Position eines Endes der optischen Faser (10) geliefert werden kann,
- Einsetzen der Energieübertragungseinrichtung der Vorrichtung (100) derart, dass eine Zustandsänderung des ersten festen Punkts (160a) bei der ersten vordefinierten Temperatur (Tpd1) bewirkt wird,
- Einsetzen des faseroptischen Sensors und Erfassen der Position der Temperaturänderung an einer Stelle entlang der optischen Faser (10),
- Distanzkalibieren des faseroptischen Sensors derart, dass die vom Sensor gemessene Position und die ausgehend von der Einrichtung zur Distanzmessung (300) gemessene Position übereinstimmen.

## Claims

1. Device (100) for calibrating the temperature of a fiber-optic temperature sensor with which an optical fiber (10) of a fiber-optic temperature sensor is to be provided, said device (100) comprising:
- a device body (101) having a passage (109) through which the optical fiber (10) is to pass, and
- a means for transferring heat energy (161a),
the device (100) **being characterized in that** it comprises at least one portion (160a) referred to as a first fixed point, which is made from a first material having at least one first predefined temperature (Tpd 1) at which the state thereof changes, said first fixed point (160a) is thermally connected to the optical fiber (10) when the optical fiber (10) is provided with the device (100), the heat-transferring means (161a) is arranged in the device body (101) such that, during the actuation thereof, the heat-transferring means exchanges heat energy with the first fixed point (160a) so as to cause a change in the state thereof at the first predefined temperature (Tpd1).

2. Device (100) according to claim 1, in which is further provided a portion made from heat conducting material (150), said portion (150) being arranged in the device body (101) so as to provide a thermal connection between the first fixed point (160a) and the optical fiber (10) when the optical fiber is provided with the device (100).

3. Device (100) according to claim 2, in which the portion made from conducting material (150) is of lengthened shape, the passage (109) being a longitudinal passage cut in said portion made from conducting material (150).

4. Device (100) according to claim 3, in which the passage (109) has a system of lateral introduction adapted to allow the lateral introduction of an optical fiber (10) into the passage (109), the introduction system moreover being adapted to maintain in place the optical fiber (10) after its introduction into the passage (109).

5. Device (100) according to any of the preceding claims, in which is moreover provided a temperature measuring means arranged to measure the temperature of the portion made from conducting material (150) and/or of the first fixed point (160a), said measuring means being preferentially adapted to carry out an absolute temperature measurement.

6. Device (100) according to any of the preceding claims, in which the first fixed point (160a) is thermally connected to the optical fiber (10) on a part of the optical fiber (10), said thermal connection being adapted such that the length of the part of the optical fiber (10) in thermal connection with the first fixed point (160a) is greater than or equal to the spatial resolution of the fiber-optic temperature sensor.

7. Device (100) according to any of the preceding claims, in which the means for transferring heat energy comprises a means of regulating the heat energy adapted to regulate the heat energy exchanged between the means for transferring heat energy and the first fixed point (160a).

8. Device (100) according to any of the preceding claims, in which heat confinement means are provided, said confinement means being arranged so as to limit heat losses during the exchange of heat energy between the means for transferring heat energy and the first fixed point (160a).

9. Device (100) according to one of the preceding claims, in which is also provided at least one portion (160b), referred to as second fixed point, which is made from a second material having at least one second predefined temperature at which the state thereof changes (Tpd2) different from the first predefined temperature (Tpd1), said second fixed point (160b) is thermally connected to the optical fiber (10) when the optical fiber (10) is provided with the device (100) and the heat-transferring means is arranged in the device body (101) such that, during the actuation thereof, the heat-transferring means exchanges heat energy with the second fixed point (106b) to cause a change of state at the second predefined temperature (Tpd2).

10. Device according to claim 9, in which is also provided at least one portion (160c), referred to as third fixed point, which is made from a third material having at least one third predefined temperature at which the state thereof changes different from the first and the second predefined temperature (Tpd1, Tpd2), said third fixed point (160c) is thermally connected to the optical fiber (10) when the optical fiber (10) is provided with the device (100) and the heat-transferring means is arranged in the device body (101) such that, during the actuation thereof, the heat-transferring means exchanges heat energy with the third fixed point (106c) to cause a change of state at the third predefined temperature, the first material being composed of 99.78% of gallium by weight and 0.22% of bismuth by weight, the second material being composed of 49% of bismuth by weight, 21% of indium by weight, 18% of lead by weight and 12% of tin by weight, the third material being composed of 66.7% of indium by weight and 33.3% of bismuth by weight.

11. Method of calibrating the temperature of a fiber-optic temperature sensor **characterized in that** it implements a device (100) according to any of the preceding claims and **in that** it comprises the steps consisting in:
- supplying a device (100) according to any of the preceding claims,
- equipping an optical fiber (10) of the fiber-optic sensor of the device (100), the equipment of the optical fiber (10) being realized such that the optical fiber (10) is arranged along the passage (109),
- implementing the energy transfer means of the device (100) so as to cause a change of state of the first fixed point (106a) at the first predefined temperature ((Tpd1),
- implementing the fiber-optic sensor and detecting a change of temperature at a location along the optical fiber (10),
- waiting for a stabilization of the temperature measured at the location of the optical fiber (10) and calibrating the temperature measured at said location with respect to the first predefined temperature (Tpd1).

12. Method according to claim 11, in which is further provided the steps consisting in:
- stopping, or modifying, the implementation of the energy transfer means so as to stop, or to reverse, the exchange of heat energy with the first fixed point (160a), said stoppage, or inversion, being carried out such that the first fixed point (160a) reaches a temperature corresponding to a reverse change of state,
- waiting for the dissipation of part of the energy exchanged between the first fixed point (160a) and the energy transfer means, such that the change of state of the first fixed point (160a) begins to reverse,
- waiting for a stabilization of the temperature measured at the location,
- correcting the calibration of the temperature measured at the location from the reverse change of state temperature of the first fixed point (160a).

13. Method of distance calibration of a fiber-optic temperature sensor **characterized in that** it implements a device according to any of claims 1 to 10 and **in that** it comprises the steps consisting in:
- supplying a device (100) according to any of claims 1 to 9,
- equipping an optical fiber (10) of the fiber-optic sensor of the device (100), the equipment of the optical fiber (10) being realized such that the optical fiber (10) is arranged along the passage (109), said equipment being formed at a location along the optical fiber (10),
- providing a means of measuring the distance (300) of the location of the device (10) with respect to a reference position of the optical fiber (10), said reference position being able to be supplied in particular by the position of another device (100') according to one of claims 1 to 9 or the position of an end of the optical fiber (10),
- implementing the energy transfer means of the device (100) so as to cause a change of state of the first fixed point (160a) at the first predefined temperature ((Tpd1),
- implementing the fiber-optic sensor and detecting the position of the change of temperature at a location along the optical fiber (10),
- distance calibrating the fiber-optic sensor so as to make the position measured by the sensor correspond with the position measured from the means of measuring the distance (300).
